**Europäisches Patentamt**

**European Patent Office**

**Office européen des brevets**

(11) Veröffentlichungsnummer: **0 076 358**
**A1**

(12) # EUROPÄISCHE PATENTANMELDUNG

(21) Anmeldenummer: **82101900.7**

(22) Anmeldetag: **10.03.82**

(51) Int. Cl.³: **F 16 F 15/26**
**F 02 B 67/04, F 02 B 75/32**

(30) Priorität: **13.03.81 DE 3109778**
**18.08.81 DE 3132502**

(43) Veröffentlichungstag der Anmeldung:
**13.04.83 Patentblatt 83/15**

(84) Benannte Vertragsstaaten:
**AT BE CH DE FR GB IT LI LU NL SE**

(71) Anmelder: **Schmuck, Johann**
**Sternplattenweg 11**
**D-8201 Bad Feilnbach/Obb.(DE)**

(72) Erfinder: **Schmuck, Johann**
**Sternplattenweg 11**
**D-8201 Bad Feilnbach/Obb.(DE)**

(74) Vertreter: **Pätzold, Herbert, Dr.-Ing.**
**Mühlthaler Strasse 102**
**D-8000 München 71(DE)**

(54) **Hubkolben-Maschine.**

(57) Eine Ausgleichsanordnung, mit deren Hilfe nicht nur Massen- bzw. Fliehkräfte 1. und 2. Ordnung voll ausgeglichen, sondern auch schädliche Wirkungen aus Kolben-Seitenkräften vollständig eliminiert werden.

Die Arbeitseinheiten der Maschine sind paarweise und spiegelbildlich zu einer parallel zur Kurbelwellen-Achse verlaufenden Symmetrieebene angeordnet und so betrieben werden, daß ihre Kurbelwellen [12, 12', 86, 86'] synchron zueinander, jedoch in entgegengesetztem Drehsinn umlaufen, und daß jeder Arbeitseinheit mindestens ein auf der Kurbelwelle angebrachtes Gegengewicht [12a, 12a', 86a, 86'] und mindestens eine mit Ausgleichsgewicht [24a, 24a', 86a, 86a'] ausgerüstete, von der Kurbelwelle angetriebene und zu ihr parallele Ausgleichswelle [24, 24' 96, 96'] zugeordnet sind, wobei die Gegen- und Ausgleichsgewichte eines Arbeitseinheits-Paares gleiche Massen besitzen und ebenfalls spiegelbildlich zur Symmetrieebene angeordnet sind.

Fig. 2

EP 0 076 358 A1

Johann SCHMUCK
Sternplattenweg 11
D-8201 Bad Feilnbach/Obb.

Bad Feilnbach, den 12.10.1981
1691/S-11/1692/WP-2

**0076358**

Claim(s) Nr // ........
to be abandoned

## H u b k o l b e n - M a s c h i n e

Die Erfindung bezieht sich auf eine Hubkolben-Maschine mit gerader Anzahl von gleichen Arbeitseinheiten, deren jede einen Hubzylinder sowie ein Kurbelwellen-Getriebe umfaßt, und mit einer Gegengewichts-Anordnung zum Ausgleich der aus rotierenden sowie oszillierenden Massen der Maschinenelemente resultierenden Massen- und Fliehkräfte.

Bei Hubkolben-Maschinen, insbesondere bei mit Hubkolben ausgerüsteten Brennkraftmaschinen werden bereits Gegengewichts-Anordnungen verwendet, die zum Ausgleich der freien Massen-bzw. Fliehkräfte 1.und 2.Ordnung dienen. Andererseits sind auch Anordnungen bekannt, die einen mindestens teilweisen Ausgleich der Kolben-Seitemkräfte bewirken, um die durch diese Kräfte hervorgerufenen Drehmomente um die Kurbelwellen-Achse zu eliminieren. Solche Drehmomente, die während des Arbeitsspieles einer Maschine periodisch auftreten und stark schwingungserregend wirken, führen nämlich zu erheblichen Schwingungen des gesmmten Maschinenkörpers gegenüber der Maschinen-Basis, woraus wiederum bekannte Nachteile resultieren, wie Zerrüttelungen, Rißbildungen, Geräuschbelästigungen odgl.

Die vorliegende Erfindung hat zur Aufgabe, diese Nachteile der bekannten Bauarten zu beseitigen und eine Ausgleichsanordnung zu schaffen, mit deren Hilfe nicht nur Massen-bzw.Fliehkräfte 1. und 2.Ordnung voll ausgeglichen, sondern auch schädliche Wirkungen aus Kolben-Seitenkräften vollständig eliminiert werden. Diese Aufgabe wird erfindungsgemäß dadurch gelöst, daß die Arbeits-

/2

einheiten der Maschine paarweise und spiegelbildlich zu einer parallel zur Kurbelwellen-Achse verlaufenden Symmetrieebene angeordnet sind und so betrieben werden, daß ihre Kurbelwellen synchron zueinander, jedoch in entgegengesetztem Drehsinne umlaufen, und daß jeder Arbeitseinheit mindestens ein auf der Kurbelwelle angebrachtes Gegengewicht und mindestens eine mit Ausgleichsgewicht ausgerüstete, von der Kurbelwelle angetriebene und zu ihr parallele Ausgleichswelle zugeordnet sind, wobei die Gegen-und Ausgleichsgewichte eines Arbeitseinheits-Paares gleiche Massen besitzen und ebenfalls spiegelbildlich zur Symmetrieebene angeordnetsind.

Bei dieser erfindungsgemäßen Anordnung werden die während des Betriebes entstehenden freien Massen-bzw.Fliehkräfte jeder Einheit durch die Gewichte ausgeglichen. Die während des Hubes auf die Kolben eines Paares einwirkenden Seitenkräfte sind infolge des Synchronlaufes stets gegeneinander oder auseinander gerichtet, sodaß sich ihre Wirkungen jeweils gegenseitig aufheben. Die erfindungsgemäß gestaltete Hubkolben-Maschine besitzt demzufolge einen voll ausgeglichenen, schwingungsfreien und äußerst geräuscharmen Betrieb.

Nach einem weiteren Erfindungsmerkmal ist es vorteilhaft, zur Erzielung und Sicherstellung des Synchronlaufes eine Kupplung zwischen den Arbeitseinheiten mindestens eines Paares vorzusehen. Solche Kupplung läßt sich in einfacher Weise dadurch erreichen, daß die das Antriebsmoment auf die Ausgleichswellen übertragenden Zahnräder eines Paares miteinander in Eingriff stehen und eine Getriebe-Kupplung bilden. Hierbei wird man bevorzugt die Ausgleichswellen unterhalb der Kurbelwellen legen und mit doppelter Kurbelwellen-Drehzahl antreiben.

Hubkolben-Maschinen werden sehr häufig als Brennkraftmaschinen oder Kompressoren gestaltet. In allen Fällen, wo Schwingungsfreiheit und Geräuschdämpfung im Betrieb erforderlich sind, werden nach einer Weitergestaltung der Erfindung auch die zu einem solchen Betrieb noch zusätzlich erforderlichen Aufbauelemente ebenfalls spiegelbildlich zur Symmetrieebene angeordnet, sodaß auch aus diesen Aufbauelementen keine nachteiligen Wirkungen aus der Maschine nach außen gelangen.

Bei Verwendung von mindestens teilweise ausgeglichenen Brennkraftmaschinen zum Antrieb von weiteren Maschinen, z.B.Kompressoren entsteht vielfach der Nachteil, daß die aus der angetriebenen Maschine resultierenden Schwingungen oder Rüttelungen über die Verbindungsglieder bis in die antreibende Brennkraftmaschine gelangen und hier den Massen-Ausgleich wieder zunichte machen. Zur Vermeidung dieses Nachteileiles wird gemäß einem weiteren Merkmal der Erfindung die Bildung eines aus Brennkraftmaschine und Kompressor bestehenden Aggregates in der Weise vorgeschlagen, daß jede Arbeitseinheit der Brennkraftmaschine eine Arbeitseinheit des Kompressors antreibt und jede Ausgleichswelle der Brennkraftmaschine mit einer Ausgleichswelle einer Kompressor-Arbeitseinheit gekuppelt ist.

Kompressoren werden häufig zur Förderung von Medien benutzt, z.B. Gasen, die mit anderen in der Brennkraftmaschine verwendeten oder entstehenden Medien, beispielsweise wegen Entstehung von Giftgasen, nicht in Berührung gelangen dürfen. Außerdem soll verhindert werden, daß die in den Kurbelwellen-Räumen des Kompressors wirbelnden Gasmengen noch durch Leckmengen aus dem für Ausgleichswellen verwendeten Schmieröl angereichert werden, welche Leckmengen bis in das vom Kompressor zu fördernde Medium gelangen und seine unerwünschte Verunreinigung verursachen könnten. Es ist deshalb nach einem anderen Merkmal der Erfindung zweckdienlich, die Ausgleichswellen des Kompressors in einer getrennten, abgedichteten Kammer zu lagern. Diese Kammer kann einen Bestandteil des Kompressors bilden. Eine andere Anordnung ist in der Weise möglich, daß die Kammer einen eigenen Bestandteil bildet und am Gehäuse der Brennkraftmaschine derart befestigt wird, daß sie in das Kompressor-Gehäuse frei hineinragt und unterhalb seiner Kurbelwellen liegt.

Eine vorteilhafte Anwendung des erfindungsgemäß gestalteten und vollständig ausgeglichenen Aggregates (Brennkraftmaschine + Kompressor) ist besonders bei Wärmepumpen möglich, die für Hausbeheizungen bestimmt sind und deshalb häufig in Hauskellern stehen. Ein voll ausgeglichenes Wärmepumpen-Aggregat erzeugt nämlich keinerlei Zerrüttelungen, Erschütterungen odgl., die auf die Fundamente und Umräume nachteilig einwirken könnten, sodaß hier ein ruhiger Lauf sowie geräuscharmer Betrieb der Hausbeheizung erreicht wird.

Beim Start einer Brennkraftmaschine kommt es häufig zu unterschiedlichen Abläufen der Verbrennung mit daraus resultierenden unterschiedlichen Zylinderdrücken und auch zu Aussetzern, die die Maschine in unerwünschte Schwingungen um die Kurbelwellenachse versetzen.

Diese Schwingungen führen zu Schäden an Lagerungen, Leitungen, Regelgeräten und auch zu akustischen Belästigungen, insbesondere bei Maschinen die sehr oft starten, z.B. bei im Taktbetrieb arbeitenden Maschinen für Wärmepumpen.

Bei der vorstehend bereits erwähnten Verwendung der Hubkolben-Maschine als Brennkratmaschine werden die eben erläuterten Nachteile dadurch vermieden, daß für die Hubräume von zwei zusammengehörenden Arbeitseinheiten, ein gemeinsamer Brennraum vorgesehen ist. Dadurch ist gewährleistet, daß bei Verdichtung und Verbrennung gleicher Druck in den Hubräumen herrscht und auch bei Aussetzen von Zündungen keine freien Kräfte entstehen, die die Laufruhe der Maschine beeinträchtigen.

Der gemeinsame Brennraum liegt in der Mitte zwischen zwei Arbeitseinheiten. Er ist als scheibenförmige Wirbelkammer ausgebildet. Von jedem Hubraum einer Arbeitseinheit aus, mündet ein Verbindungskanal rechteckigen Querschnitts, sich stetig im Querschnitt verengend, tangential in die Wirbelkammer ein. Dadurch wird in bekannter Weise, die beim Verdichten in die Wirbelkammer einströmende Verbrennungsluft in Drehung versetzt.

Wird nun die beschriebene Maschine als Dieselmotor betrieben, so ist in Mitte der Wirbelkammer eine Mehrloch-Einspritzdüse angeordnet, die mit ihren Kraftstoffstrahlen in der sich drehenden Verbrennungsluft ein feines Kraftstoff-Luftgemisch erzeugt, das unter günstigen Umständen verbrennt.

Wird die beschriebene Maschine als Otto-Motor betrieben, so ist in der Nähe der Einmündung eines Verbindungskanales in die Wirbelkammer eine Zündkerze angeordnet, da hier günstigere Bedingungen zur Einleitung der Verbrennung herrschen, als in Mitte der Wirbelkammer.

In der nachstehenden Beschreibung sind Ausführungsbeispiele der Erfindung anhand von Zeichnungen erläutert. Es zeigen:

Fig.1 einen Längsschnitt durch das aus Brennkraftmaschine und Kompressor bestehende Aggregat nach Linie A-A der Fig.2,

Fig.2 einen Querschnitt durch die Brennkraftmaschine nach Linie B-B der Fig.1,

Fig.3 einen Querschnitt durch die Brennkraftmaschine nach Linie C-C der Fig.2,

Fig.4 einen Kompressor-Querschnitt nach Linie E-E der Fig.1,

Fig.5 eine abgewandelte Ausführungsform im Querschnitt,

Fig.6 den Zylinderkopf einer Einspritzbrennkraftmaschine in Ansicht aus Richtung F der Fig.7,

Fig.7 einen Querschnitt nach Linie G-G der Fig.6,

Fig.8 den Zylinderkopf eines Otto-Motors in Ansicht aus Richutng H der Fig.9, und

Fig.9 einen Teilschnitt nach Linie J-J der Fig.8.

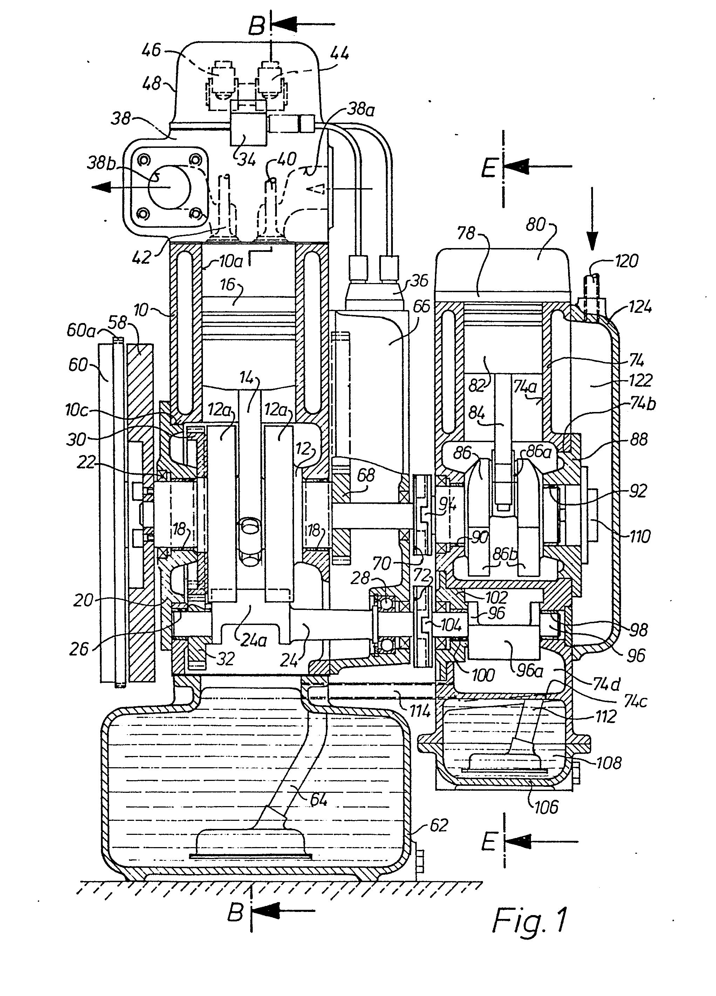

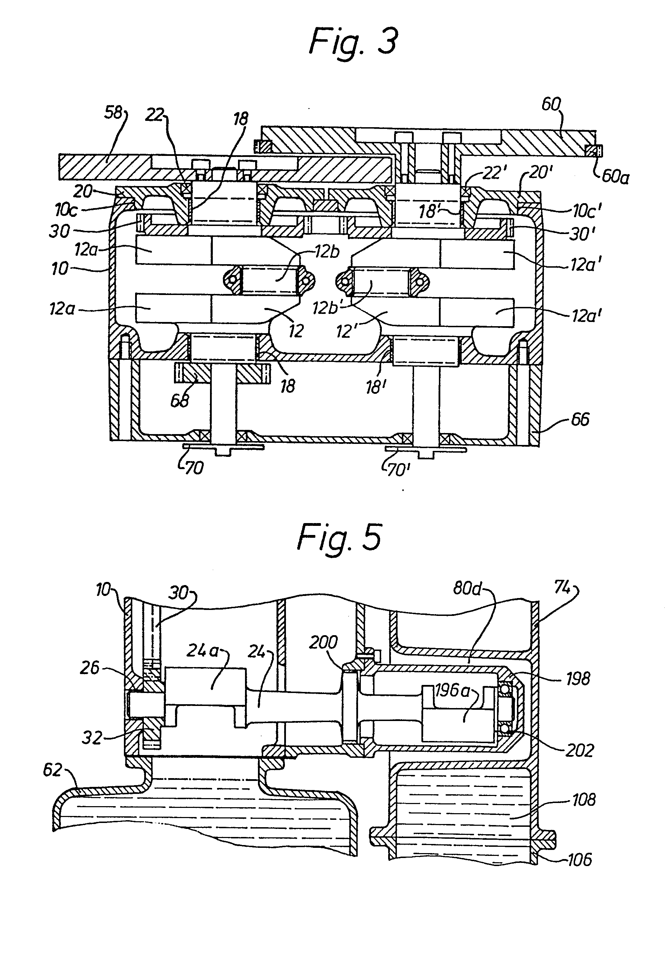

Das in Fig.1-4 dargestellte Ausführungsbeispiel zeigt ein Aggregat mit einer Brennkraftmaschine und einem Kompressor, welches Aggregat vorzugsweise für Wärmepumpen bestimmt ist. In einem gemeinsamen Maschinengehäuse sind zwei gleiche Arbeitseinheiten der als Einspritzbrennkraftmaschine arbeitenden Antriebsmaschine spiegelbildlich zu einer Symmetrieebene S angeordnet. Auch der Kompressor umfaßt zwei gleiche Arbeitseinheiten, die ebenfalls spiegelbildlich angeordnet sind. Die einander entsprechenden Aufbauelemente der Arbeitseinheiten sind deshalb mit gleichen Zahlen bezeichnet, die Elemente der einen Einheit tragen jedoch zusätzlich noch einen Beistrich.

Im Maschinengehäuse 10 ist eine Kurbelwelle 12 gelagert, an deren Kurbelzapfen 12b eine Pleuelstange 14 angreift. Der zugeordnete Kolben 16 läuft in einem Hubzylinder 10a des Gehäuses 10. Die beiden Hauptlager der Kurbelwelle 12 sind als Gleitlager ausgebildet und mit 18 bezeichnet. In einer seitlichen Öffnung 10c des Gehäuses 10 ist ein Lagerschild 20 befestigt, das einen Wellendichtring 22 trägt. Die Öffnung 10c ist so groß, daß die Kurbelwelle 12 in das Gehäuse eingeführt werden kann. Die Welle 12 weist an jedem Schenkel ein Gegengewicht 12a auf. Unterhalb und parallel zur Kurbelwelle 12 ist eine Ausgleichswelle 24 im Gehäuse 10 gelagert, die ein Ausgleichsgewicht 24a trägt. Die Welle 24 läuft in einem Gleitlager 26 und einem Kugellager 28 und wird von der Kurbelwelle 12 mit doppelter Drehzahl, aber in entgegengesetzter Drehrichtung angetrieben. Dieser Antrieb erfolgt über ein Zahnrad 30 der Kurbelwelle 12 und ein Zahnrad 32 der Ausgleichswelle 24.

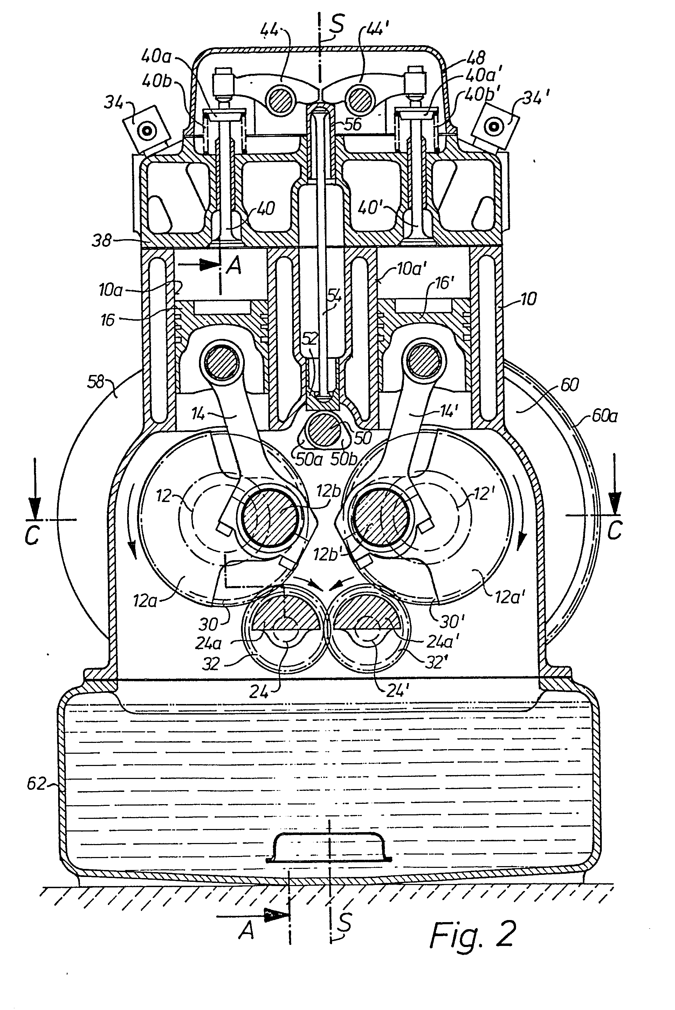

Die Brennkraftmaschine besitzt weitere Betriebselemente, die ebenfalls spiegelbildlich zur Symmetrieebene S angeordnet sind. Diese Elemente umfassen eine Einspritzdüse 34, die von einer Einspritzpumpe 36 gespeist wird und in einem gemeinsamen Zylinderkopf 38 der beiden Arbeitseinheiten sitzt. Die Ein-und Auslaßventile 40 bzw.42 werden entgegen der Wirkung ihrer an Federtellern 40a,42a anliegenden Schließfedern 40b,42b durch Kipphebel 44 bzw.46 betätigt, die durch einen Deckel 48 nach außen abgeschlossen sind. Zum Antrieb der Kipphebel dient eine gemeinsame Nockenwelle 50 mit zwei Nocken 50a bzw.50b. Der Nocken 50b treibt die Stösselelemente 52-56 für Kipphebel 44, während die Nocke 50a gleiche Stösselelemente für Kipphebel 46 betätigt, die in Fig.2 nicht ersichtlich sind, weil sie hinter den Elementen 52-56 liegen.

Die Verbrennungsluft tritt im Einlaßkanal 38a zum Einlaßventil 40 ein, während die Auspuffgase durch die Auslaßöffnung 38b den Zylinderkopf 38 verlassen.

An einem Ende der Kurbelwelle 12 ist ein Schwungrad 58 angeschraubt. Am Ende der anderen Kurbelwelle 12' ist ein Schwungrad 60 derart angeschraubt, daß es das andere Schwungrad 58 teilweise übergreift. Am Umfang des Schwungrades 60 ist ein Zahnkranz 60a angebracht, in welchen ein nicht dargestelltes Zahnritzel eines elektrischen Anlassers beim Starten eingreift.

Das Gehäuse 10 ist nach unten offen und wird durch einen Schmieröl-Vorratsbehälter 62 abgeschlossen, in dem eine größere Schmierölmenge (Jahresbedarf) lagert. Eine Saugleitung 64 führt zu einer nicht dargestellten (Zahnrad-)Schmierölpumpe, die innerhalb eines am Gehäuse 10 seitlich befestigten Deckels 66 untergebracht ist.

Zum Antrieb dieser Pumpe dient z.B.ein Zahnrad 68, das auf der Kurbelwelle 12 festsitzt.

Das andere, der Schwungradseite abgekehrte Ende der Kurbelwelle 12 ragt durch den Deckel 66 seitlich heraus und trägt hier eine Kupplungsscheibe 70. Auch das Ende der Ausgleichswelle 24 ragt an dieser Seite heraus und trägt eine ähnliche Kupplungsscheibe 72. Der Behälter 62 ist am Fundament verankert und trägt den gesammten Aufbau der Brennkraftmaschine.

Seitlich neben der Brennkraftmaschine ist ein mit zwei Arbeitseinheiten ausgerüsteter Kompressor angeordnet, dessen Gehäuse mit 74 bezeichnet ist. Mit Hilfe von vier Schrauben 76, die an Flanschaugen 74a des Kompressor-Gehäuses 74 aufsitzen und in das Maschinengehäuse 10 einschraubbar sind, wird unter Zwischenschaltung von die Schrauben 76 umgebenden, nicht dargestellten Abstandhülsen das Kompressor-Gehäuse 74 mit dem Maschinen-Gehäuse 10 lagerichtig verbunden und von ihm getragen.

Das Kompressor-Gehäuse 74 ist nach oben durch eine Ventilplatte 78 und einen Deckel 80 abgeschlossen. Im Hubzylinder 74a ist der Kolben 82 angeordnet, der mit einer Pleuelstange 84 gekuppelt ist. Die Pleuelstange ist am Zapfen 86a einer Kurbelwelle 86 angelenkt, die bei der Montage duch eine Öffnung 74b in das Gehäuse 74 eingeführt wird, die dann durch einen seitlichen Lagerdeckel 88 wieder verschlossen wird. Die Kurbelwelle 86 läuft in Gleitlagern 90 und 92 und trägt an ihrem der Brennkraftmaschine zugewandten Ende eine Kupplugsscheibe 94, die mit der Kupplungsscheibe 70 an der Maschinen-Kurbelwelle 12 unter Zwischenschaltung einer an sich bekannten Kreuzscheibe in Eingriff steht und den Kompressor-Antrieb besorgt. An jedem Schenkel der Kurbelwelle 86 ist ein Gegengewicht 86b abgebracht.

Unterhalb der Kurbelwelle 86 ist eine Ausgleichswelle 96 mit Ausgleichsgewicht 96a angeordnet. Diese Welle läuft in Gleitlagern 98,100 einerseits im Gehäuse 74 und andererseits in einem Deckel 102. An dem der Brennkraftmaschine zugewandten Ende trägt die Ausgleichswelle 96 eine Kupplungsscheibe 104, die mit der Kupplungsscheibe 72 an der Ausgleichswelle 24 der Brennkraftmaschine ebenfalls unter Zwischenschaltung einer Kreuzscheibe in Eingriff steht.

Das Kompressor-Gehäuse 74 ist nach unten durch einen Deckel 106 abgeschlossen. Eine Wandung 74c trennt den Bewegungsraum 74d der Ausgleichswelle 96,96a vom Raum 108 ab, der als Schmieröl-Vorratsbehälter dient, der eine größere Ölmenge (Jahresbedarf) aufnehmen kann. Eine Förderpumpe 110, die im Lagerdeckel 88 untergebracht ist und von der Welle 86 direkt angetrieben wird, saugt das Schmieröl aus dem Behälter 108 in einer Leitung 112 an und fördert es in nicht dargestellten Leitungskanälen zu den einzelnen Schmierstellen im Kompressor. Die Versorgung der Lagerstellen der im getrennten Raum 74d untergebrachte Ausgleichswellen 96,96' mit Schmieröl erfolgt in nicht dargestellter Weise vom Schmierkreislauf der Brennkraftmaschine. Das im geschlossenen Raum 74d gesammelte überschüssige Öl wird in einer Leitung 114 zum Behälter 62 der Brennkraftmaschine zurückgeführt. Der Schmierölkreislauf der Ausgleichswellen 96,96' ist somit vom Schmieölkreislauf der Kurbelwellen 86,86' getrennt. Dadurch wird vermieden, daß das Schmieröl im Kurbelwellen-Kreislauf des Kompressors, das gegebenenfalls mit Leckmengen des geförderten Mediums vermischt sein kann, in den Schmierölkreislauf der Ausgleichswellen 96,96' und schließlich auch der Brennkraftmaschine gelangen kann. Außerdem wird verhindert, daß die in dem Kurbelwellen-Raum des Kompressors wirbelnden Gasmengen noch zusätzlich durch Leckmengen aus dem Schmieröl für die Ausgleichswellen angereichert werden, welche Leckmengen von hier in das zu fördernde Medium gelangen und seine unerwünschte Verunreinigung verursachen können.

In der Ventilplatte 78 des Kompressors sind die Ventile der beiden Arbeitseinheiten des Kompressors untergebracht, die beispielsweise als Klappenventile bekannter Art ausgeführt sein können. Jedes Saugventil ist mit 116 und jedes Druckventil mit 118 bezeichnet. Das zu fördernde Medium, z.B. Kühlmittelgas für die Wärmepumpe, wird in einer Zuleitung 120 in einen Raum 122 eingeführt, der zwischen dem Gehäuse 74 und einem seitlichen Deckel 124 gebildet ist. Dieser Raum mündet in einen weiteren Raum 74f zwischen den Zylindern 74a,74a' ein, der wiederum über Durchgänge 74e und 78a in einen Saugraum 80s innerhalb des Deckels 80 einmündet. Eine Wandung 80a des Deckels 80 trennt den Saugraum 80s vom Druckraum 80d ab, an den eine Auslaßleitung 126 für das geförderte Medium angeschlossen ist.

Zur Inbetriebnahme des Aggregates wird mittels des Anlassers das Schwungrad 60 in Bewegung gesetzt. Da die beiden Arbeitseinheiten der Brennkraftmaschine duch Eingriff der Zahnräder 32 und 32' miteinander gekuppelt sind, werden beide Arbeitseinheiten zugleich in Bewegung gesetzt. Ihre Einheiten laufen nun synchron an, sodaß sie beispielsweise ihren oberen Totpunkt zur gleichen Zeit einnehmen. Die Kurbelwellen 12 und 12' bewegen sich jedoch infolge der Spiegelbild-Anordnung im Gegensinne.

Über Kupplungen 70,94 sowie 72,104 zwischen den Arbeitseinheiten
der Brennkraftmaschine und des Kompressors wird erreicht, daß auch
die beiden Arbeitseinheiten des Kompressors synchron
arbeiten und seine Wellen 86 und 96 in entgegengesetztem Drehsinne laufen. Da die Brennkraftmaschine im Viertakt arbeitet,
wird während eines Arbeitszyklus der Brennkraftmaschine der Kompressor zwei Arbeitszyklen ausführen.

An dieser Stelle sei noch angemerkt, daß die Kurbelwellen der
Brennkraftmaschine gegenüber den Kurbelwellen des Kompressors
derart angeordnet sind, daß jeder Kurbelzapfen der Wellen 12,12'
gegenüber den Kurbelzapfen der Wellen 86,86' um einen Winkel von
etwa 90$^o$ versetzt ist. Dadurch können die Spitzen eines gemeinsamen Drehkraft-Diagrammes von Brennkraftmaschine verringert
werden.

Während des Betriebes der Brennkraftmaschine aus den rotierenden
und oszillierenden Massen resultierenden Massen-bzw.Fliehkräfe
1.Ordnung werden durch die Gegengewichte 12a und 12a' an den
Wellen 12 und 12' in senkrechter Richtung voll ausgeglichen. Es
Entsteht hierbei an jedem Kurbeltrieb noch ein Überschuß an
Fliehkraft in horizontaler Richtung, der jedoch durch den Fliehkraftüberschuß der Gegenüberliegenden Arbeitseinheit eliminiert
wird, sodaß nach außen keine freien Kräfte wirken können.

Die Ausgleichsgewichte 24a und 24a' an den Ausgleichswellen 24,
24' sind derart bemessen, daß die während des Betriebes entstehenden, in der Zylinderachse wirkenden Massenkräfte 2.Ordnung in
senkrechter Richtung ebenfalls voll ausgeglichen werden. Duch die
gegenüberliegende Anordnung der Arbeitseinheiten werden die überschüssigen Massenkräfte in horizontaler Richtung gegenseitig
aufgehoben.

Durch die entgegengerichtete Drehbewegung und die spiegelbildliche Anordnung der beiden Kurbelwellen 12,12' zur Symmetrieebene S sind auch diejenigen wechselnden Seiten-Kräfte stets
einander entgegengerichtet, die bei der Verdichtung und Verbrennung in der Brennkraftmaschine von den Kolben 16,16' auf
die zugeordneten Zylinder 10a und 10a' ausgeübt werden. Die
Seiten-Kräfte in der einen Arbeitseinheit werden somit durch
die entgegengesetzten Seiten-Kräfte in der anderen Arbeitseinheit
vollständig aufgehoben. Derartige Kräfte können deshalb keine
Drehmomente um die Kurbelwellenachsen bewirken.

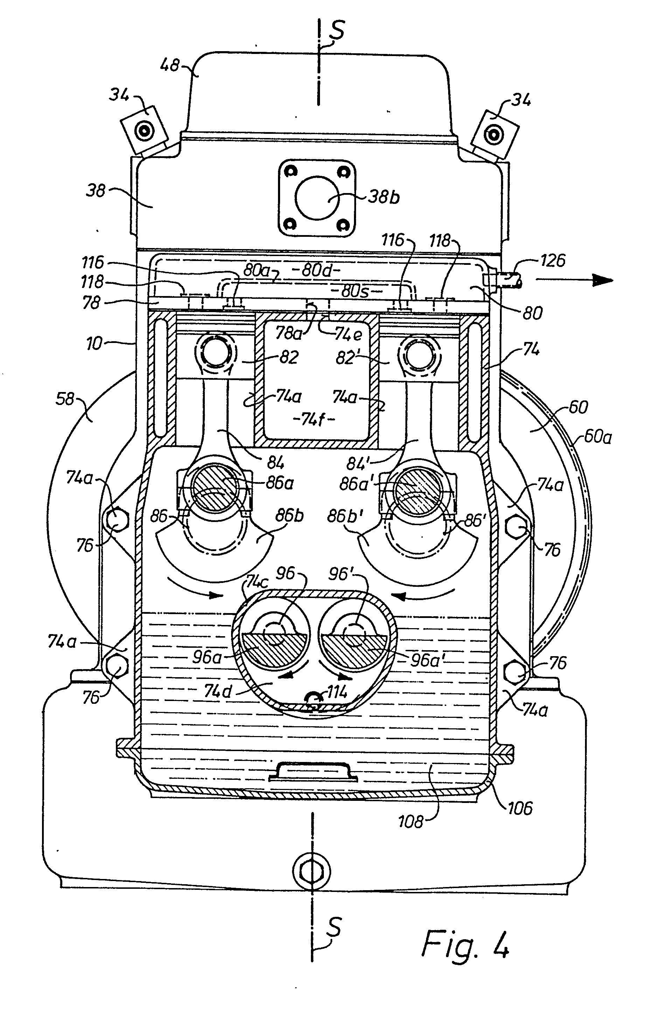

Es soll der Ordnung halber noch erwähnt werden, daß die gedachte Symmetrieebene S parallel zu und zwischen den beiden Kurbelwellen 12 und 12' verläuft und die Achsen der Steuerelemente 50
bis 56 einschließt, wie am besten aus Fig.2 oder 4 ersichtlich
ist.

Die Betriebselemente der Brennkraftmaschine, beispielsweise
Ventile und ihre Antreibselemente, sind ebenfalls spiegelbildlich zu der Symmetrieebene angeordnet. Die aus diesen Betriebselementen gegebenenfalls resultierenden, in horizontaler Richtung wirkenden Massenkräfte heben sich in den beiden Arbeitseinheiten gegenseitig auf. Darüberhinaus kann man auch diejenigen Massen, die auf der einen Seite der Kipphebel-Lagerzapfen
wirken (Elemente 52-56), gegenüber den auf der anderen Seite
wirkenden Massen (Elemente 40-40b mit 40'-40b') so bemessen,
daß sich auch die in senkrechter Richtung wirkenden Massenkräfte
gegenseitig aufheben.

Im angekuppelten Kompressor werden die Massenkräfte 1. und 2.
Ordnung mit Hilfe der Gegengewichte 86b,86b' und der Ausgleichsgewichte 96a,96a' in ähnlicher Weise wie bei der Brennkraftmaschine voll ausgeglichen. Auch für den Ausgleich der Seiten-Kräfte am Kompressor-Kolben gilt das vorstehend in Verbindung mit dem Ausgleich bei der Brennkraftmaschine Gesagte in analoger Weise, sodaß hier diesbezügliche Erläuterungen nicht wiederholt werden sollen.

Es ergibt sich auf diese Weise im Aggregat ein im Hinblick auf Massenkräfte 1.sowie 2.Ordnung und auch Seiten-Kräfte voll ausgeglichener Betrieb. Dies ist bei Verwendung des Aggregates in einer Wärmepumpe deshalb besonders wichtig, weil hier die Anschlußleitungen zwischen Kompressor und Wärmepumpe nicht in Schwingungen geraten und auch nach längerer Betriebsdauer keineswegs beschädigt werden können. Es wird somit über eine lange Betriebsperiode ein ruhiger, wartungsarmer Lauf sichergestellt.

Eine gedrängte Bauart der Brennkraftmaschine wird durch Näherrücken der Arbeitseinheiten an die Symmetrieebene S erreicht. Zu diesem Zweck sind die an der Kurbelwelle angelenkten Köpfe von Pleuelstangen 14,14' schräggeteilt und die Schwungräder 58,60 teilweise überlappend angeordnet.

In vorliegendem Falle wird an beiden Kurbelwellen 12,12' die gleiche Kraft abgenommen. Somit werden die Kupplungs-Zahnräder 32,32' durch keine schädlichen Drehkräfte belastet, die beim Arbeitsspiel der Brennkraftmaschine entstehen könnten. Diese Räder übertragen nur das Arbeitsmoment für die Ausgleichswellen 24,24' und gleichen gegebenenfalls noch Drehkraftunterschiede aus, die zwischen den beiden Arbeitseinheiten infolge unterschiedlicher Reibung odgl. entstehen könnten.

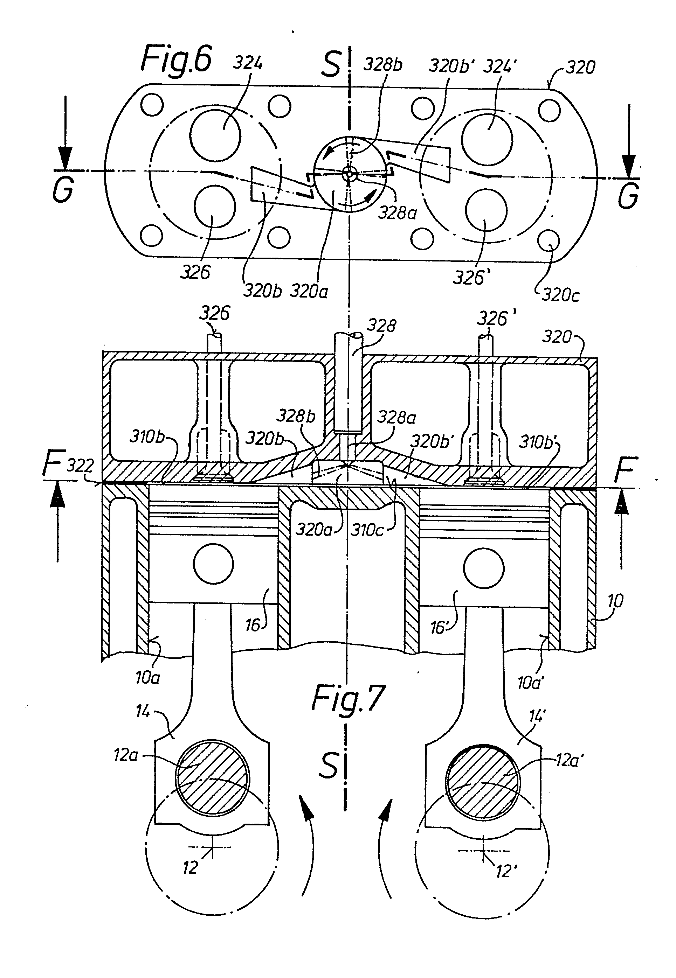

In Fig. 5 ist eine andere Anordnung für die Ausgleichsgewichte für den Kompressor dargestellt. Hier ist jede Welle 24 der Brennkraftmaschine axial verlängert und bildet mit einem Ausgleichsgewicht 196a für die zugeordnete Kompressor-Arbeitseinheit ein einstückiges Element. Das Gewicht 196a ragt in ein kapselartiges Gehäuse 198 ein, das am Gehäuse 10 der Brennkraftmaschine angeschraubt ist. Zur Lagerung der Welle 24 dienen hier die Gleitlager 26,200 im Gehäuse 10 sowie ein Kugellager 202 im Gehäuse 198. Jedes Ausgleichsgewicht 196a liegt unterhalb der zugeordneten Kurbelwelle 86,86' des Kompressors. Bei dieser Bauart ist eine gemeinsame Schmierung der Lagerstellen des Gewichtes 196a vom Kreislauf der Brennkraftmaschine leichter ausführbar. Außerdem ist hier eine Abdichtung des Bewegungsraumes vom Gewicht 196a, d.h.der Kapsel 198 gegenüber dem Kompressor-Innern nicht erforderlich.

Fig.6 bis 9 zeigen zwei weitere Ausführungsbeispiele, welche die Anordnung des Brennraumes darstellen in Fällen, wo die Hubkolben-Maschine als Verbrennungskraftmaschine betrieben wird, sei es als Einspritzbrennkraftmaschine oder als Otto-Motor mit Fremdzündung.

Bei der Bauart nach Fig. 6 + 7 überdeckt der Zylinderkopf 320 die beiden im Maschinengehäuse 10 untergebrachten Arbeitseinheiten und ist über die Dichtung 322 mit dem Gehäuse 10 verschraubt. Die nicht dargestellten Befestigungsschrauben gehen durch die Durchgangsbohrungen 320c. Die Einlaßventile 324 u.324', sowie die Auslaßventile 326 u.326' sitzen in bekannter Weise im Zylinderkopf 320 und werden über Kipphebel und Stoßstangen betätigt, wie in Fig.2 dargestellt.

Der Brennraum 320a liegt zwischen den Zylindern auf der Symmetrieebene S. Er ist als scheibenförmige Wirbelkammer ausgebildet, sein gesamtes Volumen ist im Zylinderkopf 320 untergebracht. Die Wirbelkammer steht durch die Kanäle 320b u.320b' mit den Hubräumen 310b u.310b' in Verbindung. Dadurch ist gewährleistet, daß bei allen Betriebszuständen in den Hubräumen gleiche Drücke herrschen.

Die Kanäle 320b u. 320b' münden tangential in die Wirbelkammer 320a ein und versetzen die beim Verdichten in die Wirbelkammer einströmende Verbrennungsluft in Rotation. Dies ist eine Voraussetzung für eine gute Gemischbildung.

Die Wirbelkammer und die Verbindungskanäle sind nach unten,d.h. in Richtung auf die Kolben 16, 16' offen, sie können daher auf billige Weise und mit hoher Genauigkeit hergestellt werden. Die Begrenzung der Wirbelkammer und eines Teiles der Verbindungskanäle erfolgt durch die Fläche 310c des Gehäuses 10.

Die Kraftstoff-Zufuhr erfolgt über den Düsenhalter 328 mit der Mehrlochdüse 328a. Diese sitzt in der Mitte der Wirbelkammer 320a.

Die Kraftstoffstrahlen sind mit 328b bezeichnet.

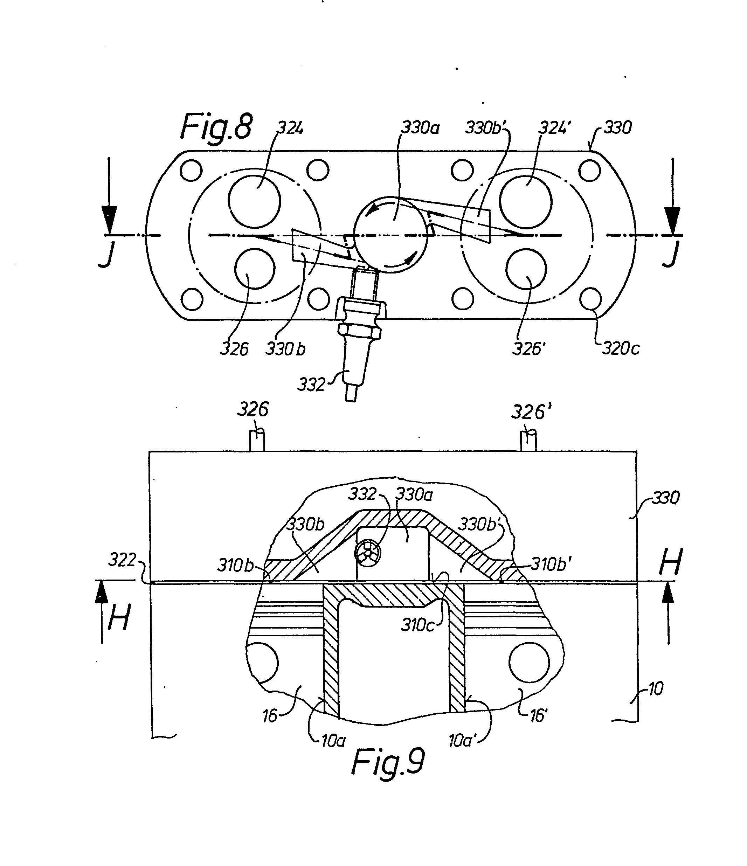

Fig. 8 u. 9 zeigen ein Ausführungsbeispiel für eine Brennkraftmaschine mit Fremdzündung,z.B. für einen Otto-Motor. Im Zylinderkopf 330 befindet sich die Wirbelkammer 330a mit den Verbindungskanälen 330b u. 330b'. Brennkammer und Verbindungskanäle unterscheiden sich vom Dieselmotor lediglich durch die Bemessung der Volumina, da der Otto-Motor mit einem niedrigeren Verdichtungsverhältnis betrieben werden muß. Die Zündkerze 332 befindet sich in der Nähe der Einmündung eines Verbindungskanales in die Wirbelkammer 330a, da hier günstige Bedingungen zur Einleitung der Verbrennung herrschen.

Beim Dieselmotor (Einspritzbrennkraftmaschine) sind noch weitere Formen eines für zwei Zylinder gemeinsamen Brennraumes denkbar, so z.B. zwei stehende Wirbelkammern bekannter Bauart, die sich auf der Symmetrielinie S berühren und deren Volumina mittels eines Durchbruches miteinander in Verbindung stehen, oder zwei in spitzem Winkel zueinander geneigte Vorkammern bekannter Bauart, deren Volumina wiederum über einen Durchbruch miteinander in Verbindung stehen. In beiden Fällen könnte die Kraftstoff-Einspritzung durch eine einzige Zweiloch-Einspritzdüse erfolgen.

Der gemeinsame Brennraum nach Fig. 7 bis 9 ist gleichermaßen gut für Diesel- und Otto-Motoren geeignet, kommt ohne zusätzliche Bauteile aus und ist auch bei längsten Laufzeiten störungsfrei.

Abschließend sei noch erwähnt, daß die Erfindung nicht allein
auf das vorstehendbeschriebene Ausführungsbeispiel beschränkt ist.
Man könnte vielmehr auch eine größere Anzahl (z.B.vier oder sechs)
der Arbeitseinheiten sowohl bei der Brennkraftmaschine als auch
im Kompressor in analoger Symmetrie-Anordnung verwenden, wenn
beispielsweise ein stärkerer Maschinen-Antrieb oder ein Kompressor
mit größerem Volumen erforderlich wären. Außerdem könnten die
erfindungsgemäß angeordneten Arbeitseinheiten auch für andere
Verwendungszwecke vorgesehen sein.

Johann Schmuck
Sternplattenweg 11
D-8201 Bad Feilnbach/Obb.

Bad Feilnbach, den 12.10.1981  **0076358**
1691/S-11/1692/WP-2

## P a t e n t a n s p r ü c h e :

1. Hubkolben-Maschine mit gerader Anzahl von gleichen Arbeitseinheiten, deren jede einen Hubzylinder sowie ein Kurbelwellen-
Getriebe umfaßt, und mit einer Gegengewichts-Anordnung zum Ausgleich der aus rotierenden sowie oszillierenden Massen der
Maschinenelemente resultierenden Massen-und Fliehkräfte, dadurch
gekennzeichnet, daß die Arbeitseinheiten paarweise sowie spiegelbildlich zu einer parallel zur Kurbelwellen-Achse verlaufenden
Symmetrieebene (S) angeordnet sind und so betrieben werden, daß
ihre Kurbelwellen (12,12'bzw.86,86')synchron zueinander, jedoch
in entgegengesetztem Drehsinne umlaufen, und daß jeder Arbeitseinheit mindestens ein auf der Kurbelwelle angebrachtes Gegengewicht (12a,12a'bzw.86a,86a') und mindestens eine mit Ausgleichsgewicht (24a,24a'bzw.96a,96a'bzw.196a) ausgerüstete, von der
Kurbelwelle angetriebene und zu ihr parallele Ausgleichswelle
(24,24'bzw.96,96') zugeordnet sind, wobei die Gegen-und Ausgleichsgewichte eines Arbeitseinheits-Paares gleiche Massen besitzen und
ebenfalls spiegelbildlich zur Symmetrieebene angeordnet sind.

2. Hubkolben-Maschine nach Anspruch 1, dadurch gekennzeichnet,
daß zur Erzielung und Sicherstellung des Synchronlaufes eine
Kupplung (32,32') zwischen den Arbeitseinheiten mindestens eines
Paares vorgesehen ist.

3. Hubkolben-Maschine nach Anspruch 2, dadurch gekennzeichnet,
daß die das Antriebsmoment auf die Ausgleichswellen (24,24')
übertragenden Zahnräder (32,32') eines Paares miteinander in
Eingriff stehen und eine Getriebe-Kupplung bilden.

/2

4. Hubkolben-Maschine nach Anspruch 3, dadurch gekennzeichnet, daß die Ausgleichswellen (24,24'bzw.96,96') unterhalb der Kurbelwellen (12,12'bzw.86,86') liegen und mit doppelter Kurbelwellen-Drehzahl umlaufen.

5. Hubkolben-Maschine nach einem der vorhergehenden Ansprüche, dadurch gekennzeichnet, daß sie als Brennkraftmaschine (10) betrieben wird, deren zusätzlich noch erforderlichen Betriebselemente ebenfalls spiegelbildlich zur Symmetrieebene (S) angeordnet sind.

6. Hubkolben-Maschine nach einem der Ansprüche 1-4, dadurch gekennzeichnet, daß sie als Kompressor (74) betrieben wird, dessen zusätzlich noch erforderlichen Betriebselemente ebenfalls spiegelbildlich zur Symmetrieebene (S) angeordnet sind.

7. Hubkolben-Maschine nach Anspruch 5 und 6, dadurch gekennzeichnet, daß die Brennkraftmaschine (10) und der Kompressor (74) ein Aggregat bilden, in dem jede Kurbelwelle (12,12') der Brennkraftmaschine eine Kurbelwelle (86,86') des Kompressors antreibt und jede Ausgleichswelle (24,24') der Brennkrafmaschine mit einer Ausgleichswelle (96,96') einer Kompressor-Einheit gekuppelt ist.

8. Hubkolben-Maschine nach Anspruch 7, dadurch gekennzeichnet, daß die Ausgleichswellen (96,96') des Kompressors in einer getrennten, abgedichteten Kammer (74d bzw.198) gelagert sind.

9. Hubkolben-Maschine nach Anspruch 8, dadurch gekennzeichnet, daß die Kammer (74d) einen Bestandteil des Kompressor-Gehäuses (74) bildet.

10. Hubkolben-Maschine nach Anspruch 8, dadurch gekennzeichnet, daß die Kammer (198) einen eigenen Bestandteil bildet und am

- 3 -

Gehäuse (10) der Brennkraftmaschine derart befestigt ist, daß sie in das Kompressor-Gehäuse (74) frei hineinragt und unterhalb seiner Kurbelwellen (96,96') liegt.

11. Hubkolben-Maschine nach Anspruch 7, dadurch gekennzeichnet, daß das hinsichtlich Massen-und Fliehkräfte sowie Drehmomente voll ausgeglichene Aggregat bei einer für Heizungszwecke verwendeten Wärmepumpe integriert ist.

12. Hubkolben-Maschine nach Anspruch 5, dadurch gekennzeichnet, daß der Brennraum (320a;330a) zwischen den Arbeitseinheiten auf der Symmetrieebene (S) liegt und mit dem Hubraum (310b;310b') jeder Arbeitseinheit durch einen Kanal (320b,320b';330b,330b') verbunden ist.

13. Hubkolben-Maschine nach Anspruch 12, dadurch gekennzeichnet, daß der Brennraum (320a;330a) vollständig im Zylinderkopf (320;330) der Maschine untergebracht ist, wobei Brennraum (320a;330a) und Kanäle (320b,320b';330b,330b') in Richtung auf die Kolben (16,16') offen sind und die gegenüberliegende Fläche (310c) des Maschinengehäuses (10) den Brennraum in dieser Richtung begrenzt.

14. Hubkolben-Maschine nach Anspruch 12 oder 13, dadurch gekennzeichnet, daß der Brennraum (320a;330a) scheibenförmig ausgebildet ist und die Kanäle (320b,320b';330b,330b') tangential in ihn einmünden.

15. Hubkolben-Maschine nach Anspruch 12, die als Einspritzbrennkraftmaschine arbeitet, dadurch gekennzeichnet, daß in der Mitte des Brennraumes (320a) eine Einspritzdüse (328a) angeordnet ist.

16. Hubkolben-Maschine nach Anspruch 12, die mit Fremdzündung arbeitet, dadurch gekennzeichnet, daß nahe der Kanal-Einmündung(330a) in Brennraum (330a) eine Zündkerze (332) angeordnet ist.

0076358

Fig. 1

1691/S-11/1692/WP
0076358

*Fig. 2*

0076358

1691/S-11/1692/WP-2

## Fig. 3

## Fig. 5

Fig. 4

Fig.6

Fig.7

0076358

Fig.8

324    330a    330b'    324'    330

J ——— J

326    330 b    326'    320c

332

326    326'

332    330a

330b    330b'

310b    310b'

322    310c

H ——— H

330

310c

16    16'

10a    10a'

10

Fig.9

**Europäisches Patentamt**

## EUROPÄISCHER RECHERCHENBERICHT

EP 82 10 1900

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| Y | FR-A- 705 951 (JUNKERS) <br> * Seite 1, Zeilen 1-45; Seite 2, Zeile 100 - Seite 3, Zeile 46; Figuren 4-6 * & DE - C - 526283 <br> --- | 1,2,5 | F 16 F 15/26 <br> F 02 B 67/04 <br> F 02 B 75/32 |
| Y | DE-A-3 027 568 (PHILIPS) <br> * Seite 5, Zeile 16 - Seite 6, Zeile 27; Seite 8, Zeilen 10-15; Zeile 25 - Seite 10, Zeile 27; Figur 1 * <br> --- | 1-3,6 | |
| A | CH-B- 392 149 (LIST) <br> * Seite 1, Zeilen 1-6; Seite 2, Zeilen 70-103; Figur 1 * <br> --- | 3,4 | |
| A | US-A-2 862 652 (HOIBY) <br> * Spalte 1, Zeilen 15-18; Spalte 2, Zeilen 40-66; Figur 2 * <br> --- | 7,11 | |
| A | DE-C- 614 347 (ENZIAN) <br> * Seite 2, Zeilen 22-42; Figuren * <br> --- | 6 | RECHERCHIERTE SACHGEBIETE (Int. Cl. ³) <br><br> F 16 F <br> F 02 B <br> F 01 B |
| A | US-A-3 537 437 (PAUL) <br> * Spalte 1, Zeilen 7-20; Spalte 3, Zeile 71 - Spalte 4, Zeile 73; Figuren 1,6-9,13 * <br> --- | 12-16 | |
| P,X | FR-A-2 466 558 (ASSELIN) <br> * Seite 10, Zeilen 1-22; Figur 3 * <br> ----- | 1-4 | |

Der vorliegende Recherchenbericht wurde für alle Patentansprüche erstellt.

| Recherchenort | Abschlußdatum der Recherche | Prüfer |
|---|---|---|
| DEN HAAG | 07-05-1982 | KOOIJMAN F.G.M. |